Europäisches Patentamt

European Patent Office

Office européen des brevets

(19)

(11) Publication number: **0 215 573**
**B1**

(12) **EUROPEAN PATENT SPECIFICATION**

(45) Date of publication of patent specification: **03.10.90**

(51) Int. Cl.⁵: **G 10 L 5/06**

(21) Application number: **86306244.4**

(22) Date of filing: **13.08.86**

(54) Apparatus and methods for speech recognition.

(30) Priority: **20.08.85 GB 8520777**
**12.11.85 GB 8527898**

(43) Date of publication of application:
**25.03.87 Bulletin 87/13**

(45) Publication of the grant of the patent:
**03.10.90 Bulletin 90/40**

(84) Designated Contracting States:
**CH DE FR GB IT LI SE**

(56) References cited:

**RESEARCH DISCLOSURE, no. 256, August 1985,
page 418, Emsworth, Hampshire, GB;
"Composite fenemic phones"**

**PROCEEDINGS OF THE INTERNATIONAL JOINT
CONFERENCE ON PATTERN RECOGNITION,
Coronado, 8th-11th November 1976, pages
616-620, IEEE, New York, US; M.S. FOX et al.:
"Approximation techniques for the learning of
sequential symbolic patterns"**

(73) Proprietor: **NATIONAL RESEARCH
DEVELOPMENT CORPORATION
101 Newington Causeway
London SE1 6BU (GB)**

(72) Inventor: **Senensieb, Gideon Abraham
9 Lawrance Lea
Harston Cambridge CB2 5QR (GB)**

(74) Representative: **Hasler, Christopher et al
Patent Department National Research
Development Corporation 101 Newington
Causeway
London SE1 6BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 215 573 B1

**Description**

The present invention relates to apparatus and methods for recognising spoken words in a predetermined vocabulary and to apparatus and methods for training speech recognition apparatus.

An approach to speech recognition which has been investigated employs mathematical models termed hidden Markov models. In this approach a mathematical model of each word to be recognised is, established and its parameters are estimated using a suitable training procedure. Given an observation sequence obtained in a prescribed way from an unknown spoken word, it is possible to compute the maximum *a posteriori* probabilities that each of the word-models could give rise to that observation sequence. The word corresponding to the model yielding the highest probability can then be recognised as the most likely identity of the unknown word. This concept can be extended to the recognition of sequences of words spoken in connected fashion.

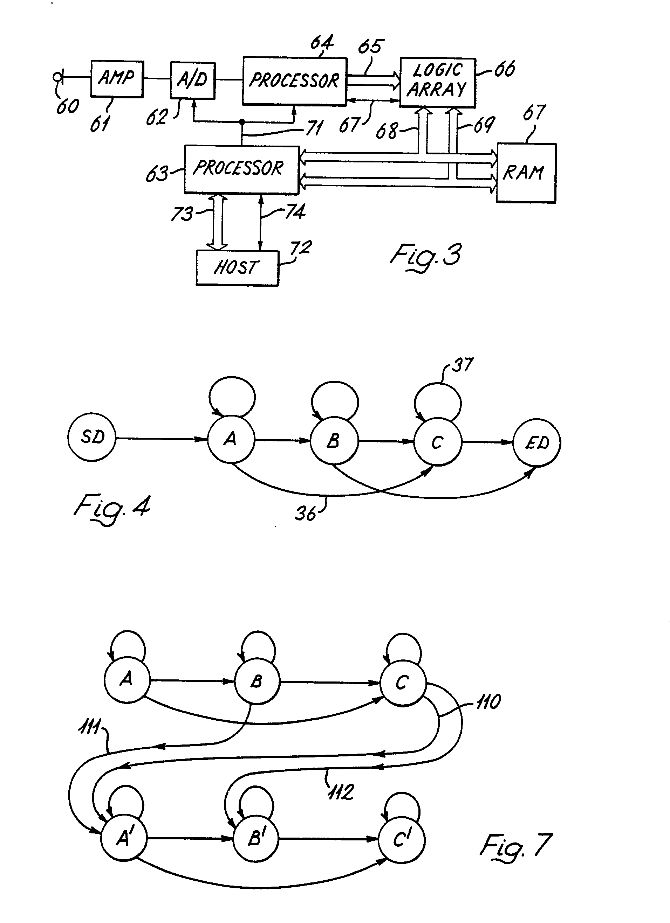

A Markov model is a finite state machine comprising a set of states; for example see the five state model of Figure 4. The model can only be in any one state at any time. At the end of each discrete time interval the model makes a transition from the current state either to another state or to the current state itself. Given that the model is in one state, it is not possible to predict with certainty what the next state to be visited will be. Rather, the probabilities of making all the possible transitions from one state to another or to itself are known.

During each discrete time interval the model gives rise to an observation which is, in general, a multidimensional measurable quantity. In a hidden Markov model, a knowledge of the state is not sufficient to predict with certainty what the observation will be. Instead, the state determines the *a priori* probability distribution of observations which the model generates whilst in that state.

The approach to speech recognition mentioned above suffers from the disadvantage that it is necessary to make a large number of calculations in a very short time as samples of sounds making up speech to be recognised are received by a recogniser. This problem is particularly acute where continuous speech is to be recognised. In addition the requirement for a large number of calculations in a short time makes the recognition apparatus too costly for many applications such as personal computers and data entry by voice for example by telephone. Enlarging a set of speech recognition phones for a particular utterance is known from Research Disclosure (1985) Aug, no. 256, page 418.

According to a first aspect of the present invention there is provided apparatus for recognising words in a predetermined vocabulary comprising

means for successively sampling sounds and obtaining respective sets of signals representative of attributes of the sounds,

means storing data representing a number of finite state machines one for, and forming an individual model of, each word in the predetermined vocabulary, the data specifying the states which form the finite state machines and assigning a probability function to each state with each probability function specifying the probabilities that the signals representative of the attributes of the sounds would assume any observed values if the models produced real sounds and any model was in a state to which that probability function is assigned,

means for determining from the sets of signals and the probability functions, the probabilities that any given set of signals would be generated if the models produced real sounds and any model was in any given state,

means for determining from the probabilities calculated and the properties of the finite state machines the maximum likelihoods that sequences of sound samples represent the predetermined words, and

means for providing an output, based on the maximum likelihoods detected, indicating one of the predetermined words as being most likely to have been spoken,

characterised in that the means for storing data stores data in which at least one probability function is assigned to more than one said state.

According to a second aspect of the present invention there is provided a method of recognising words in a predetermined vocabulary comprising the steps of

successively sampling sounds and obtaining respective sets of signals representative of attributes of the sounds,

storing data representing a number of finite state machines one for, and forming an individual model of, each word in the predetermined vocabulary, the data specifying the states which form the finite state machines and assigning a probability function to each state with each probability function specifying the probabilities that the signals representative of the attributes of the sounds would assume any observed values if the models produced real sounds and any model was in a state to which that probability function is assigned,

determining from the sets of signals and the probability functions, the probabilities that any given set of signals would be generated if the models produced real sounds and any model was in any given state,

determining from the probabilities calculated and the properties of the finite state machines the maximum likelihoods that sequences of sound samples represent the predetermined words, and

providing an output, based on the maximum likelihoods detected, indicating one of the predetermined words as being most likely to have been spoken,

2

EP 0 215 573 B1

characterised in that in the data stored at least one probability function is assigned to more than one state.

The main advantage of the invention is that the number of probability functions can be greatly reduced from, for example, 1024 for a vocabulary of 64 words (that is 64 models each of 16 states) to for example about 100 because usually most of the probability functions are assigned to a number of states and therefore to a number of finite state machines. The complexity of calculation, the number of periodic operations required and the amount of storage used can therefore also be reduced with consequent cost savings.

The finite state machines are alternatively known as hidden Markov models.

The means for determining maximum likelihoods may comprise means for implementing the Viterbi algorithm (see S.E. Levinson, L.R. Rabiner, M.M. Soudhi, "An Introduction to the Application of the Theory of Probabilistic Functions of a Markov Process in Automatic Speech Recognition, Bell System Technical Journal, Vol. 62, No. 4, Pt 1 April 1983, pp. 1035—1074), or the "forward-backward" algorithm (see S.E. Levinson et al, op. cit.).

The means for determining the said probabilities may comprise means for calculating a distance vector from the probability functions and each set of signals as they occur, each vector being representative of the probabilities that any given set of signals would be generated if the models produced real sounds and any model was in any given state.

The means for determining the said probabilities may also comprise logic circuit means specially constructed to determine values representative of the minimum cumulative distances of each state of each finite state machine using the current distance vector.

The time required for, and complexity of, calculation can be reduced by using the logic circuit means which is specially constructed in hardware form to make calculations of cumulative distances.

For hidden Markov models a finite state machine may comprise a plurality of states linked by transitions, each state and each transition having a corresponding signal set probability function and a transition penalty, respectively. A state penalty may then be computed for any observed signal set to represent the reciprocal of the probability of the said observed signal set given the probability function. Each finite state machine represents a word in the vocabulary to be recognised and the transition penalties are characteristic of that word. The state penalties however depend on probability functions and on sounds currently received.

The means for storing data may store the minimum cumulative distance for each machine, and the logic circuit means may be constructed to determine for each transition of a current state a value dependent on the minimum cumulative distance of the originating state of that transition and the transition penalty, to determine the minimum said value and to determine the minimum cumulative distance for the current state from the minimum said value and the state penalty for the current state. Each minimum cumulative distance may be regarded, in effect, as indicating the highest probability that a sequence of sounds forming part of a word in the vocabulary have been uttered.

Apart from the logic circuit means, one or more of the other means mentioned above can be formed by a general purpose computer, preferably one based on a microprocessor and specially permanently programmed for the operations required.

The means for successively sampling sounds may include a microphone coupled by way of an amplifier having a wide dynamic range to an analogue-to-digital converter. In addition these means may include, for example, a bank of digital filters to analyse incoming signals into frequency spectra the intensities of which then form respective said sets of signals or means for obtaining the said sets by linear prediction (see J. D. Markel and A. H. Gray, "Linear Prediction of Speech", Springer-Verlag, 1976).

The means for calculating a distance vector may do so for each frame (that is a predetermined number of sample periods), each distance vector having a number of elements each of which is calculated from the probability function of a state and one of the said sets of signals.

The apparatus and method of the two aspects of the invention usually require word models defined by machine states and transition probabilities, and the states require the specification of probability functions. These states and functions are obtained by "training" with words of the predetermined vocabulary. This vocabulary can be changed as required by retraining.

According to a third aspect of the present invention there is provided a method of forming finite state machines to represent words in a predetermined vocabulary comprising

sampling sounds making up each word in the vocabulary to obtain sets of signals representative of the words,

forming an individual finite state machine for each word comprising states based on the sets of signals obtained for that word, and

forming probability functions,

characterised by assigning one probability function to each state, with at least one probability function assigned to more than one state,

each probability function relating the sets of signals to the probability of observing the sounds when any of the finite state machines containing a state to which that probability function is assigned correctly models an utterance by being in that state.

3

EP 0 215 573 B1

In the third aspect of the invention, forming an individual machine for each word and forming probability functions may include

deriving data defining the said states for each word from the sets of signals,

deriving one probability function for each state from the sets of signals,

calculating the probability of transition from each state to every allowed subsequent state, in each finite state machine,

entering data identifying each word as it is spoken, and

storing data defining the states which form each machine and identifying the word which is represented by that machine,

characterised by merging some of the probability functions to provide a plurality of the said functions less than a predetermined number, merging being carried out according to the degree of similarity of the probability functions and to the predetermined number.

Preferably the step of deriving data defining the states includes merging some successive sets of signals for each word according to criteria which relate to suitability for merging, and maximum and minimum numbers of states for each word to provide data defining the states for that word.

The suitability of two successive sets of signals for merging may be assessed by calculating the logarithm of the ratio of the likelihood that each set of signals for potential merging arose from the merged sets to the likelihood that each set of signals arose from distinct sets. The sets can then be merged if this logarithm exceeds a threshold, which can either be predetermined by experiment or obtained using a test statistic. Similarly the suitability of two probability functions for merging may be assessed by calculating the logarithm of the ratio of the likelihood that each probability function for potential merging arose from the same probability function to the likelihood that each probability function arose from distinct probability functions. The functions can then be merged if this logarithm exceeds a threshold obtained in a similar way to the other threshold.

Obtaining the said sets of signals preferably includes the known process of dynamic time warping.

Apparatus according to the invention may be constructed for training and/or recognition. Usually the apparatus will be formed by one or more mask programmed logic arrays and one or more microprocessors, each such array or processor forming a plurality of the means mentioned above.

Certain embodiments of the invention will now be described by way of example with reference to the accompanying drawings in which:-

Figures 1(a) and 1(b) form a flow diagram of a method according to the invention for selecting states and deriving probability density functions for a word,

Figure 2 is a flow diagram of a method according to the invention for recognising words,

Figure 3 is a block diagram of apparatus according to the invention,

Figure 4 is a diagram of a finite state machine used in explaining an embodiment of the invention,

Figure 5 is the outline of a table indicating how input values to a Viterbi engine used in one embodiment of the invention occur and are accessed,

Figure 6 is a table indicating quantities which are calculated and stored one row at a time by the Viterbi engine,

Figure 7 is an example indicating how transitions between finite state machines representing different words may occur,

Figure 8 is a diagram of storage locations in a Viterbi engine used in one embodiment of the invention,

Figure 9 is a flow diagram of a Viterbi engine used in one embodiment of the invention, and

Figure 10 is a block diagram of a dedicated circuit for a Viterbi engine used in one embodiment of the invention.

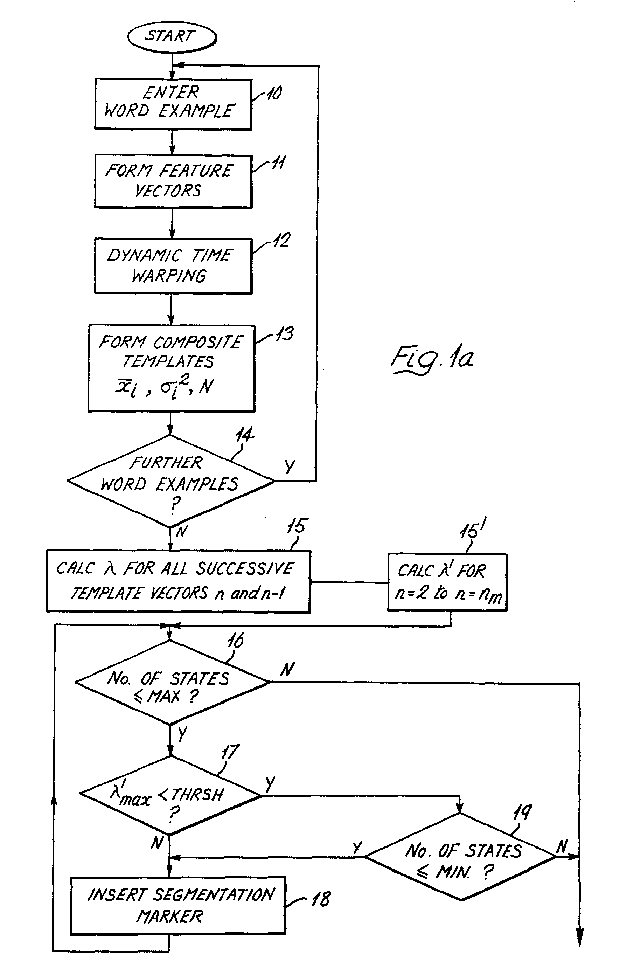

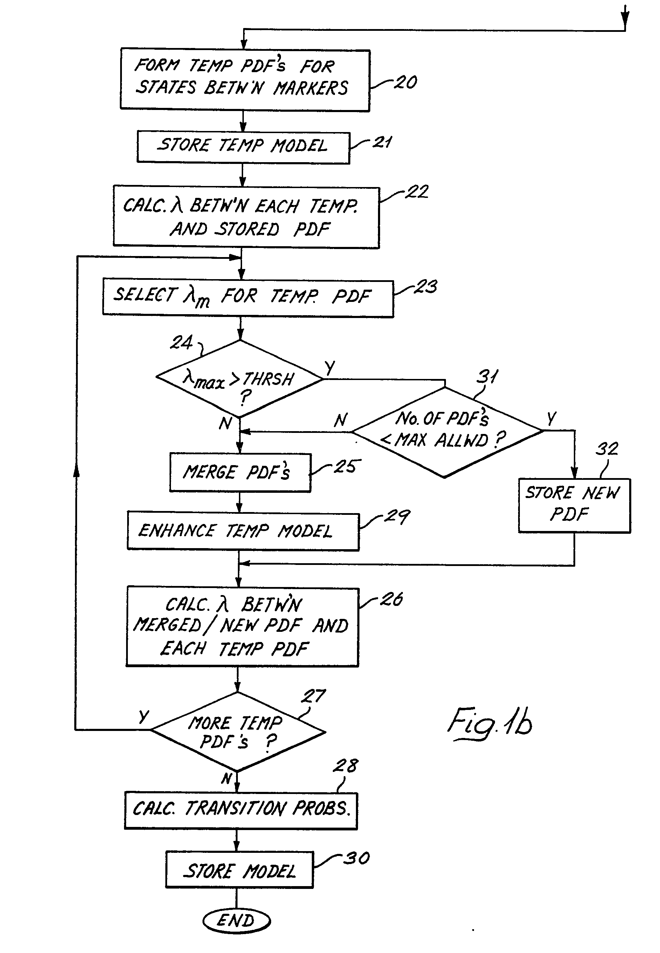

A method of obtaining the parameters of a hidden Markov model of a word from spoken examples of that word during training will first be described. In Figure 1(a) one of the words of the vocabulary is entered into training apparatus in an operation 10. Briefly, the training apparatus may comprise a microphone, an amplifier with appropriate dynamic gain, an analogue-to-digital converter and a bank of digital filters, the word to be entered being spoken into the microphone. An operation 11 is then carried out in which feature vectors are formed, one for each frame period, a frame comprising, for example, 128 sampling periods, of the analogue-to-digital converter. Each feature vector may comprise a number F, for example 10, of elements corresponding to intensities in respective frequency bands spread across the audio frequency band from 0 to 4,8 kHz, for example, and may be derived using a bank of filters and means for extracting energy values at the filter outputs. Thus a feature vector can be expressed as

$$[x'_1, x'_2, x'_3 ----x'_F]^T$$

(where T signifies transposition to the more usual column or vertical vector), for example

$$[x'_1, x'_2, x'_3 ----x'_{10}]^T$$

In general different utterances of the same word are not identical, an important source of variation being a non-linear distortion of the timescale of one utterance with respect to the timescale of another. For this reason a process of dynamic time warping (operation 12) is carried out which matches the two

4

EP 0 215 573 B1

timescales by aligning feature vectors for the most recently spoken utterance of the word with the feature vector means of a composite template which except for the first utterance has already been derived as described below from previous utterances of the word. Dynamic time warping is a known process which can be carried out using the dynamic programming algorithm and will therefore be only briefly described here. In effect the feature vectors of the most recently spoken utterance are divided into groups of one or more vectors and each group corresponds to one template vector. The correspondence is derived in such a way that the resulting total spectral distance between word vectors and corrresponding template vectors is minimised.

Template vectors are formed in an operation 13 by merging each group of feature vectors with the corresponding template vector according to the alignment derived by the dynamic time warping. Each template vector comprises F elements (using the previous example there are 10 elements) each of which is formed by weighted averaging of each element of the template vector with those elements in the group of feature vectors corresponding to that template vector. A template vector can therefore be expressed as the feature vector mean

$$[\bar{x}_1, \bar{x}_2, \bar{x}_3 ---- \bar{x}_F]^T.$$

In addition each template vector includes elements

$$[\sigma_1^2, \sigma_2^2, ---- \sigma_F^2]^T$$

compiled from

$$\sigma_i^2 = \overline{x_i^2} - (\overline{x_i})^2 \; ; \; \text{if } \sigma_i^2 < \sigma_{min}^2 \text{ then } \sigma_i^2 = \sigma_{min}^2$$

where
i takes values 1 to F,
$\sigma_i^2$ is the variance of the set of feature vectors used informing that template vector,
$\overline{x_i^2}$ is the mean square of that set, and
$\sigma_{min}^2$ is a positive constant.

Further, the template vector has associated with it a number N, representing the number of feature vectors merged into that template vector; that is the number of corresponding feature vectors in each group obtained in time warping summed for all repetitions of a word. Each time the operation 13 is carried out the means, mean squares and number of feature vectors are updated. When a word is entered for the first time the composite template, is formed directly from the sequence of feature vectors available from operation 11. Each template vector has its feature vector mean set equal to the corresponding feature vector obtained from the spoken word. The number of feature vectors, N, is set to 1.

When a predetermined number of examples of a word have been entered, for example ten, a test 14 prevents further return to the operation 10, and the composite template eventually provides the data defining the states of a hidden Markov model modelling that word. Each of the template vectors can be regarded as representing a model state although at this time there are more states than required and each state is not sufficiently characterised by a template vector. The next group of operations in Figure 1(a) reduces the number of states to a smaller number.

As a first step the template is segmented. A quantity λ is calculated (operation 15) for each pair of successive template vectors, with the pairs overlapping in the sense that each template vector except tbe first and last appears in two pairs. Thus λ is calculated for all pairs n and n—1 from n = 2 to n = $n_m$, the number of template vectors in that template. Let the value of λ computed for the pair of template vectors n and n—1 be denoted as λ(n). If the likelihood that the observations which occur arose from the probability distribution obtained when two template vectors in a pair are merged is $L_S$, where the observations are the feature vectors contributing to the template vectors, and the likelihood that the observations which occurred arose from two different most likely distributions is $L_D$, then

$$\lambda = \log \left( \frac{L_D}{L_S} \right)$$

λ is thus a measure of how suitable two states are for merging. It can be shown that, assuming Gaussian multivariate distributions with diagonal covariance matrices

5

EP 0 215 573 B1

$$\lambda = \sum_{f=1}^{F} \left\{ N_1 \left( \ln \left( \frac{\sigma_{yf}^2}{\sigma_{1f}^2} \right) - 1 + \frac{1}{\sigma_{yf}^2} \left( \sigma_{1f}^2 + (\bar{x}_{1f} - \bar{x}_{yf})^2 \right) \right) \right.$$

$$\left. + N_2 \left( \ln \left( \frac{\sigma_{yf}^2}{\sigma_{2f}^2} \right) - 1 + \frac{1}{\sigma_{yf}^2} \left( \sigma_{2f}^2 + (\bar{x}_{2f} - \bar{x}_{2f})^2 \right) \right) \right\}$$

where the subscripts 1 and 2 refer to the two consecutive template vectors, the subscript f refers to the fth feature in a feature vector, N is the number of feature vectors which have been merged into the template vector and the subscript y applies to a hypothetical template vector which would be formed if the two consecutive template vectors were merged into one.

Modified values $\lambda'(n)$ are now computed (operation 15') for $n = 2$ to $n = n_m$ according to $\lambda'(n) = 2\lambda(n)$ — $\lambda(n—1) - \lambda(n + 1)$, with arbitrarily high values set for $\lambda(1)$ and $\lambda(n_m)$. The $\lambda'(n)$ values are second differencies used to indicate large changes in $\lambda(n)$ and therefore to indicate suitable positions for segmentation as is now described.

The template vectors for a model are stored sequentially and a number of segmentation markers are now inserted between the template vectors to indicate how template vectors are to be merged: where there is no marker adjacent template vectors will be merged. When a certain number of markers have been inserted the number of final states in the model will equal that number plus one and therefore a test 16 is carried out to determine whether the number of states so far defined is less than a maximum value, for example eight. If so, a test 17 is carried out to determine whether the maximum value of $\lambda'(\lambda'_{max})$ which has not already been used to insert a segmentation marker is less than a threshold value. If it is less no segmentation is required. Provided $\lambda'_{max}$ is above the threshold a new segmentation marker is inserted in an operation 18 at the position between template vectors corresponding to this value of $\lambda'_{max}$ and then the test 16 is repeated. If, however, test 17 indicates that $\lambda'_{max}$ is less than the threshold then a test 19 is performed to determine whether the number of states defined by markers is less than or equal to a minimum value. If it is less, a further segmentation marker must be inserted even though $\lambda'_{max}$ is less than the threshold value and therefore the operation 18 is carried out, this loop (that is the tests 16, 17, 19 and the operation 18) being followed until the number of states becomes greater than or equal to the minimum value, for example three.

If the criterion for the minimum number of states is met in the test 19, before or after inserting markers corresponding to $\lambda'_{max}$ less than the threshold, then merging of template vectors takes place in an operation 20 of Figure 1(b). To merge template vectors the feature vector means and mean squares are averaged taking account of the total number of feature vectors giving rise to each template vector merged. Each merged vector so produced with its associated standard deviation defines a probability density function (PDF) assuming that the probability is Gaussian. However, the PDFs so formed are temporary in the sense that the next stage of Figure 1(b) merges the temporary PDFs with PDFs which have already been stored for other words (if any), or if inappropriate stores further PDFs. Before merging PDFs, the temporary PDFs are stored as a temporary model of the word in an operation 20.

In operation 22 a $\lambda$ value is calculated between each temporary PDF and each stored PDF unless the word currently used for training is the first word in the vocabulary when the temporary PDFs are stored and training commences on the next word in the vocabulary. Since the temporary and stored PDFs are stored in the same form as template vectors, the calculation of $\lambda$ is then carried out in the same way as when merging template vectors.

Having completed operation 22 the minimum $\lambda$ value for one temporary PDF is selected in an operation 23 and compared in a test 24 with a threshold value which indicates whether merging is desirable. If the threshold value indicates that merging should take place then that temporary PDF and the stored PDF corresponding to $\lambda_{max}$ are merged by the averaging process described above in an operation 25 and then new values of $\lambda$ are calculated between the merged PDF (which is now stored) and each remaining temporary PDF (operation 26).

If the operation 24 indicates that the maximum value of $\lambda$ is greater than the threshold then a test 31 is carried out to determine whether the number of PDFs already stored is less than the maximum number allowed (for example 48) and if so the temporary PDF having the current maximum value of $\lambda$ under examination is stored in an operation 32. However if no more PDFs can be stored as indicated by the test 31 then the temporary PDF must be merged although its value is higher than the threshold and therefore the operation 25 is carried out.

6

As each PDF is merged in the operation 25, the model of the current word is enhanced (operation 29) by substituting a label identifying the merged PDF for the temporary PDF.

An operation 27 is now carried out to determine if there are any more temporary PDFs to be considered for merging and if so a return to operation 23 takes place.

If there are no more temporary PDFs for merging then the probabilities of transition from one state to another or of return to the same state (see arrows 36 and 37 respectively in Figure 4) are calculated in an operation 28 The probability of transition from one state to following state can be calculated by dividing the number of example utterances used to train the word by the total number of feature vectors merged into the first-mentioned state. The probability of transition from that state to itself can be obtained by subtracting the probability thus obtained from unity.

Finally the transition probabilities are stored in operation 30 with the stored PDF labels to form a complete model of the word. The processes of Figures 1(a) and (b) are repeated for every word with consequent additions to the models stored and changes to the stored PDFs. However since stored PDFs are stored in models by labels no further processing of completed models is required.

The flow diagram of Figures 1(a) and 1(b) can be implemented by programming a computer, such as a microprocessor, and since such programming is a well known technique it is not described here. If it is required to allow the processing required for each word utterance to take place during training in times which are roughly equal to the time taken for the word to be spoken, it may be necessary to employ computers which are at least partially specially constructed and one such computer is described later in this specification in connection with the recognition system which uses the models derived in training.

Models are derived for each word in the vocabulary to be recognised, for example for 64 words, by repeating each word, say, ten times into the microphone of training apparatus. The apparatus is associated with a data input device such as a keyboard to allow each word to be entered in writing and stored as a label for its model as that word is spoken repeatedly during training.

Moving on now to speech recognition using the hidden Markov models obtained in training, the same analogue circuits are used and the output from the analogue-to-digital converter is separated into the frequency domain using digital filtering as in training.

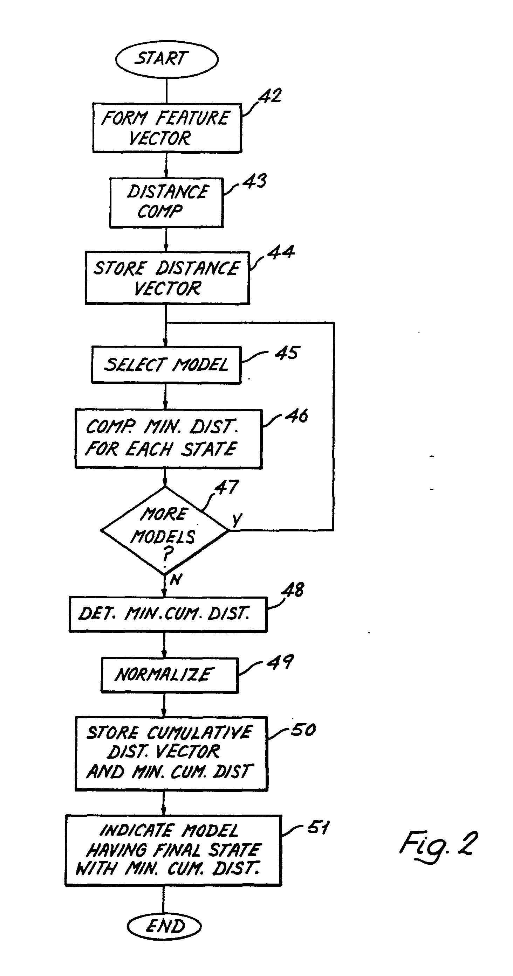

In each frame period the filter outputs are first formed in an operation 42 (Figure 2) as a feature vector having, referring to the previous example ten elements:

$$x_1', x_2', x_3', \text{----} x_{10}'.$$

Each PDF obtained during training is taken in turn and used with the elements of the feature vector to calculate a probability that the speech sample at that time was generated by the state corresponding to that PDF (operation 43). Each such computation derives, according to the "distance" expression given below, one element in a distance vector

$$[d_1, d_2, d_3, \text{----} d_m]^T$$

where m is the total number of PDFs and may, using the previous example be 48. The distance vectors produced in this way are stored in an operation 44. For a one dimensional Gaussian distribution, the probability that any model state gives rise to an observation equivalent to a feature vector is given by

$$\frac{1}{\sqrt{2\pi}\sigma} \exp\left\{-\frac{1}{2}\left(\frac{x - \bar{x}}{\sigma}\right)^2\right\}$$

where $\sigma$ is standard deviation, x is the observation and $\bar{x}$ is the mean observation.

If a distribution has J dimensions, as in the present method of speech recognition where J corresponds to the number of elements in the feature vector, the above probability is given by

$$\prod_{j=1}^{J} \frac{1}{\sqrt{2\pi}\,\sigma_j}\left[\exp\left\{-\frac{1}{2}\left(\frac{x_j - \bar{x}_j}{\sigma_j}\right)^2\right\}\right]$$

In the above expression $\pi$ means (according to known mathematical convention) that the terms obtained by substituting for j are multiplied together. The values for $x_j$ are obtained from the feature vector and those for $\bar{x}_j$ and $o_j$ from the template vector. Minus twice the natural logarithm of this probability, known in this specification as the "distance" of the probability, is given by

$$\sum_{j=1}^{J} \left( \ln \sigma_j^2 + \frac{(x_j - \bar{x}_j)^2}{\sigma_j^2} \right)$$

where a term $J\ln(2\pi)$ has been omitted since it is constant and not required in comparing relative "distances". Each element of the resulting distance vector is a measure of how improbable the speech sample is given the corresponding PDF and is computed as proportional to the logarithm of the reciprocal of the probability of the speech sample given the corresponding PDF.

The use of "distances" allows the number of multiplications and divisions to be reduced so speeding recognition and cutting cost of special purpose circuits for implementing the flow diagram.

Having obtained a distance vector which gives the probabilities that the current utterance arises from each possible model state, each model is considered in turn to determine the likelihood that the word uttered corresponds to that model. Thus in operation 45 a model is selected and in operation 46 the minimum distance for each state in the model is computed. This process is described in detail below in connection with Figures 4 to 10.

The above process is continued until each model has been processed as indicated by a test 47 and then an operation 48 is carried out in which the smallest minimum distance determined for all states of all models is found, this value being used in operation 49 to normalise all the minimum cumulative distances found. (The operations 48 and 49 are also described in connection with Figures 4 to 10.) The normalised distances are next stored as a cumulative distance vector in an operation 50. Thus this vector comprises columns of elements

$$D_1', D_2', D_3', \text{---- } D_n'$$

where n is the maximum number of states in a model with one column for each model. The smallest minimum cumulative distance is also stored. An operation 51 is then carried out to determine from the final state of each model which model has the minimum $D_n$ and provide an indication of the corresponding word as the word considered most likely to have been spoken at the current sampling period. This approach can be readily extended to the recognition of connected words, as has been described in the literature see J. S. Bridle, M. D. Brown and R. M. Chamberlain "An Algorithm for Connected Word Recognition" JSRU Research Report 1010 where traceback pointers indicating the paths taken through the models which result in the minimum cumulative distances are used. One way in which traceback pointers can be determined is described below. The following two papers also describe suitable methods for recognising connected words using minimum cumulative distances and traceback pointers:- "Partial Traceback and Dynamic Programming" P. F. Brown, J. C. Spohrer, P. H. Hockschild and J. K. Baker, pages 1629 to 1632 of Proceedings IEEE International Conference on Acoustics Speech and Signal Processing, 1982; and "The use of a one-stage dynamic programming algorithm for connected word recognition" by Hermann Ney, IEEE Transactions on Acoustics Speech, and Signal Processing, Vol. ASSP—32, No. 2, April 1984 pages 263 to 271.

The process of Figure 2 is repeated each frame period and for this purpose a fast special purpose computer is usually required. Such a machine is now described.

Apparatus which can be used for both training and speech recognition is shown in Figure 3 where a microphone 60 is coupled by way of an amplifier 61 to the input of an analogue-to-digital converter 62. The amplifier 60 has automatic gain control to provide a wide dynamic range but this amplifier and its microphone 60 are not described in detail since suitable circuits for this part of the apparatus are well known. A processor 63 which may for example be a microprocessor type Intel 8051 provides an 8 kHz sampling frequency for the converter 62 and a front end processor 64 by way of a connection 71 and thus each cycle of processing shown in Figure 2 is completed in 125 microseconds. The processor 64 carries out the digital filtering 40 mentioned above preferably with passbands divided approximately arithmetically between O and 1 kHz and logarithmically between 1 kHz and 4.6 kHz. Thus the feature vectors become available on an 8 bit bus 65 where they are passed to a logic circuit 66 which may be a mask programmed array. Handshake between the processor 64 and the logic circuit 66 is controlled by lines 67.

The processor 63, the logic circuit 66 and a random access memory (RAM) 67 are interconnected by address and data busses 68 and 69, and the host computer 72 is coupled by a bus 73 and control line 74 to the processor 63. Items 62 to 67 are expected to form apparatus which is manufactured and sold as a peripheral to be used with a host computer so that the host computer 72 provides input facilities during training, where spoken words must be identified, and a display to indicate words recognised. Where the apparatus is used for recognition only, the RAM 67 may be partially replaced by a read only memory and the host computer 72 may be replaced by a simple or intelligent display to indicate words recognised. The logic circuit 66 performs the Viterbi algorithm and thus carries out operations equivalent to the operations 45 to 48 so determining the minimum cumulative distance. The remainder of the operations shown in Figures 1(a), 1(b) and 2 are carried out by the processor 63. The RAM 67 stores the composite templates of operation 13 and the models of operation 29 including the PDFs. The RAM 67 also stores the distance vector of operation 44 and the cumulative distance vector of operation 50.

Since programming the processors is a known technique which can be followed given the algorithms of Figures 1(a), 1(b) and Figure 2, it is not described further, except that one way in which the operations 46, 48 and 49 may be carried out is now described and then an example of a Viterbi engine for carrying out these operations is given.

Although the example described indicates how traceback pointers are derived, these pointers need not, of course, be derived, if as indicated as an option in connection with the operation 51 of Figure 2, the recognition process used does not employ such pointers.

The finite state machine of Figure 4 represents a single word in the vocabulary of the recogniser. It has three normal states A, B and C, although in practice instead of these three states it would typically have many more. In addition the finite state machine has start and end dummy states (SD and ED). The normal model states are separated by transitions shown as arrows and in speech models only left to right transitions or transitions from one state to itself are employed. In a simple example for a word consisting of three sounds the sounds must occur in the left to right order or for the duration of one or more time frames a sound may stay in the same state.

The information supplied to allow words to be indicated as recognised to the processor 63 by the Viterbi engine concerns maximum likelihood paths through the models and the lengths of these paths. Maximum likelihood is determined by allocating two types of penalties to the models:-

transition penalties tp(s1, s2) which are individual to the transitions shown by the arrows between, and back to, the states, and

state penalties sp(l,t) which are allocated to a normal state at a particular iteration, t of the Viterbi engine by means of an index l(s), where s indicates the state.

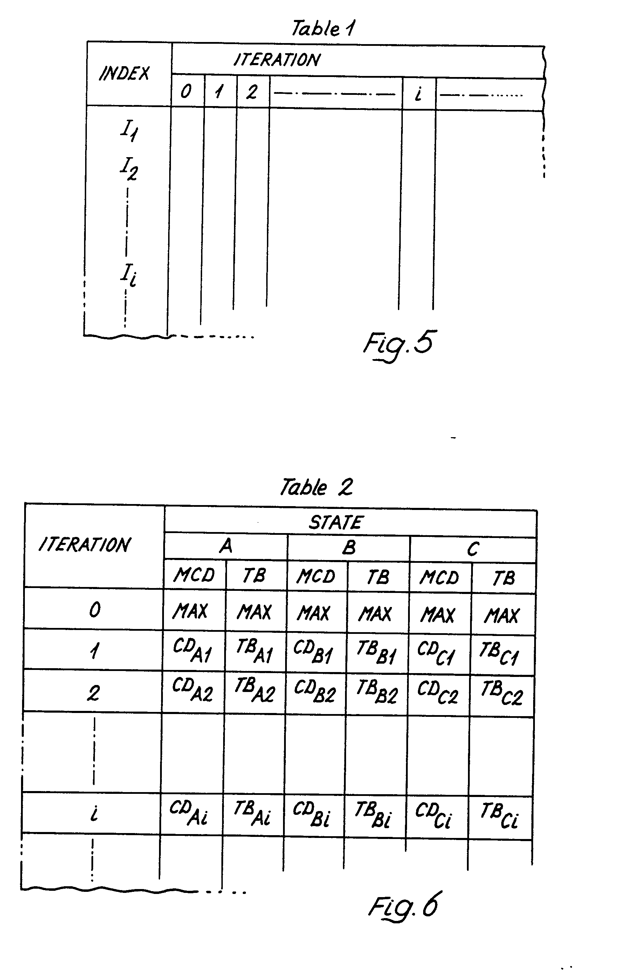

The transition penalties and indices need not remain constant for the models of a particular Viterbi engine but in this example they are held constant. Table 1 in Figure 5 shows the way in which the values associated with the indices vary with time. For the first iteration (0) the values associated with the indices $l_1$, $l_2$ ---- $l_i$ are formed by the elements of the distance vector for the first frame (0) and successive distance vectors make up the columns 1, 2 ... i of Table 1. Only the current distance vector is held by the Viterbi Engine.

The way in which the minimum distance through each model is calculated is now described. In each iteration the Viterbi engine calculates a minimum cumulative distance for each normal state starting at the rightmost state and progressing left. Thus for iteration 0 and state C the minimum cumulative distance from three paths is determined and in each path a stored cumulative distance for the state at the beginning of the path is added to the transition penalty for that path. The minimum value found is added to the penalty for being in state C obtained using the index allocated to that state and the current distance vector (that is the currently available column of Table 1). The minimum cumulative distance (MCD) found in this way for each state is held in a store which at any time holds one row of a Table 2 in Figure 6. At the first iteration 0 the values in row 0 are initially set to a maximum so that when iteration 1 is carried out the cumulative distances for states A, B and C are available to update the minimum cumulative distances as just described. For example to update the minimum cumulative distance for state C previous cumulative distances, 0, for states A, B and C are available. Having decided which is the minimum cumulative distance for state C at iteration 1 this distance is used to update MCD and at the same time a traceback pointer (TB), previously set to 0 at iteration 0, is also updated by incrementing by one the previous traceback pointer for the state from which the new minimum cumulative distance was calculated. Thus at each iteration (t) for each state (s) a minimum cumulative distance (MCD(s,t)) and a traceback pointer (TB(s,t)) are given by

$$MCD(s,t) = DV(l(s),t) + \min_x\{tp(x,s) + MCD(x,t-1)\}$$
$$X = \text{Argmin}_x\{tp(x,s) + MCD(x,t-1)\}$$
$$TB(s,t) = TB(X,t-1) + 1$$

where t refers to the current iteration,

DV(l(s),t) is the element of the distance vector obtained by using an index l(s) for a state s at iteration t,

tp(x,s) is the transition penalty associated with making a transition from state x to state s,

MCD(s,t) is the minimum cumulative distance to state s at iteration t,

TB(s,t) is the traceback pointer associated with state s at iteration t,

$\min_x\{$ signifies the minimum of the expression for all valid values of x, and

$\text{Argmin}_x\{$ signifies the value of x which causes the expression to be minimised.

As has been mentioned the Viterbi engine finds in each frame the minimum cumulative distance and traceback pointer for each state. For each finite state machine these minimum cumulative distances and the corresponding traceback pointers are passed to the decision logic as data for the logic to indicate which words have apparently been spoken. In addition to the operations described above, the Viterbi engine finds, at the end of each complete iteration through all the models, the minimum of the minimum cumulative distances for all models and in the next iteration subtracts this minimum from all the stored minimum cumulative distance values. This scaling operation is carried out to prevent, as far as possible, the stored cumulative distance values from increasing beyond the size which locations in the store can hold, that is to prevent overflow. From the above equations it can be seen that minimum cumulative distances are formed by addition processes so they inevitably increase. By subtracting a minimum value from all values found the tendency to increase is reduced. However if a stored minimum cumulative distance reaches the maximum size which can be stored it is held at that value without being increased and, in order to prevent misleading cumulative distance values being stored, the subtraction process just described is not carried out once the maximum has been reached. The maximum values automatically exit from the store eventually because at each iteration minimum cumulative distances are stored so eventually eliminating the maximum values.

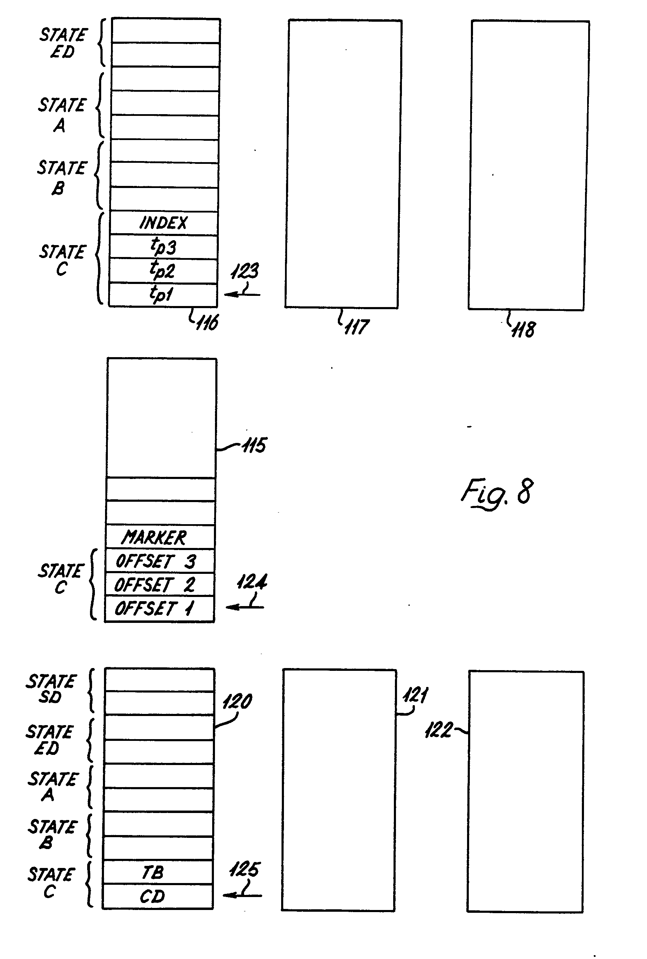

The two dummy states of Figure 5 are used to simplify transitions from one finite state machine, representing one word, to another. In Figure 7 two different words have similar models A, B, C and A', B' and C', respectively, although as mentioned above the transition penalties and indices are different. A normal transition from the end of the first model to the beginning of the second model is indicated by the arrow 110 from state C to state A'. However transitions such as indicated by the arrows 111 and 112 omitting the last state of the first model or the first state of the second model often occur when parts of words are not pronounced. The transition from state B to state B' (not shown) also often occurs. To take account of all the transitions which could occur between 64 words in the vocabulary of a typical recogniser would be extremely complicated if carried out on the basis of Figure 5 but this problem is avoided by the use of the dummy states in a way which is now described. When the Viterbi engine has completed updating the normal states for a word it updates the end dummy state (ED) by finding the minimum cumulative distance for that state in the same way as for a normal state except that there is no state penalty for the end dummy state. A traceback pointer is also stored for the end dummy state and found in the same way as other such pointers except that the traceback pointer corresponding to the minimum cumulative distance selected is not incremented before storage. When the Viterbi engine has processed all the models the end dummy with the smallest minimum cumulative distance is used to update the start dummy states (SD) of selected word models, and the other start states are updated to a maximum value. The traceback pointers for all start dummies are set to zero. Start states are selected for updating with the smallest minimum cumulative distance on a grammatical basis according to which words in the vocabulary of words to be recognised can or cannot follow previous words. Where there is no such grammar, or the grammar is ignored, all start states are updated with the smallest minimum cumulative distance found. In this way the minimum path and cumulative distance for the transition from any finite state machine to another such machine is recorded for each machine.

The Viterbi engine may be constructed using a general purpose computer or microprocessor but for continuous speech recognition it is preferable to construct a special purpose computer either from discrete integrated circuits or preferably on a single chip having a specially metallised gate or logic array in order to carry out processing in a sufficiently short time. The special purpose computer, an example of which is described later, may for example comprise an arithmetic logic unit with output connected to a number of latches some connected to the address bus of a random access memory and others to the data bus.

In order to make a computer as described in the previous paragraph flexible for this application that is to avoid hard wiring it in such a way that the number of states in the models of finite state machines and the transitions between states cannot be changed, part of the RAM 67 is allocated as a "skeleton" determining the number of states in each model and the transition paths between states. Various portions of the RAM are shown in Figure 8 and one of these portions 115 is the "skeleton". The portions 116 to 118 contain most of the data for three respective models and there is one similar portion for each model. Taking the model of Figure 4 to be represented by the RAM portion 116 it will be seen that the three lower locations contain the three entry transfer penalties $t_{p1}$ to $t_{p3}$ corresponding to the transitions to state C from other states and from itself. The fourth location contains the index which allows the state penalty to be found from Table 1. Portion 116 is divided into other locations for the states A, B and ED. The state C has one more location than the states A and B since there are three entry transitions and the state ED has one less location than the state A because there is no penalty associated with being in this state. State SD has no locations in the portion 116 since there are no transitions to it and no associated penalty. As will be described below, in carrying out iterations the Viterbi engine uses pointers to move through the portions 116, 117 and 118 and those of other models in sequence. A pointer is also used to move through the skeleton RAM portion 115 where, for each state, an offset is stored for each transition penalty.

Further portions of the RAM, one for each word, are set aside to store the minimum cumulative distances and traceback pointers associated with each state in each word. Examples of these portions are shown at 120, 121 and 122 in Figure 6. For the word shown in Figure 4 the RAM portion 120 is divided into five pairs of locations, one for each state, and containing the cumulative distance and traceback pointer for that state.

In order to update the minimum cumulative distances three pointers indicated by arrows 124 and 125 and held, in the special purpose computer, by latches, are used. The first pointer 123 initially points to the first transition penalty of the last state of the first model to be updated, in this example held by the lowest location in the RAM portion 116. The Viterbi engine has to determine which cumulative distance, at this time to the state C, is a minimum. In order to do so it must find the cumulative distances for each of the paths to the state C and then determine which is the minimum. Having obtained the transfer penalty 1, the arrow 124 points to an offset in the skeleton RAM portion 115 which determines the position of the cumulative distance in the state from which the first transition originates. Thus if the originating state is the current state then the offset is zero and the cumulative distance is that given by the pointer 125. The distance found is stored and the pointers 123 and 124 are incremented by one so that the second transition penalty is added to the cumulative distance given by offset 2 which in this case might be "2" so that the value held at a location with an address two greater than that of the pointer 125 is read, that is the cumulative distance of state B. The distance found in this way is stored if it is smaller than that previously found. The pointers 123 and 124 are again incremented to give the third transition and the cumulative distance to be added to it, and then the distance found is again stored if smaller than the distance already stored. In this way the minimum of the cumulative distance found is stored. The pointers 123 and 124 are again incremented and the pointer 123 then gives the index for finding the appropriate state penalty and the index 124 indicates that the end of iterations for state C has been reached. The minimum cumulative distance found together with its appropriate traceback pointer is now stored in the position given by the pointer 125 and all three pointers are incremented. The cumulative distance for states B and C are then updated in a similar manner as the pointers 123, 124 and 125 are incremented. However the cumulative distance and traceback pointer for the end state (ED) is obtained when all the states in a model have been updated and, as has been mentioned above, when all models have been updated (except for their start states) then the minimum cumulative distance held by any end dummy state is entered in selected start states (SDs) on a grammatical basis.

The use of the "skeleton" allows the models to be changed in three ways: firstly by changing the offsets the transitions between states are altered, and secondly if the number of offsets between two markers are changed the number of transitions to a state changes. It is this marker which indicates the completion of updating of one state. The number of states in each model can be changed by increasing the number of groups of offsets stored by the RAM portion 115 and the number of models can be increased by allocating more portions such as the portions 116, 117 and 118 and 120, 121 and 122.

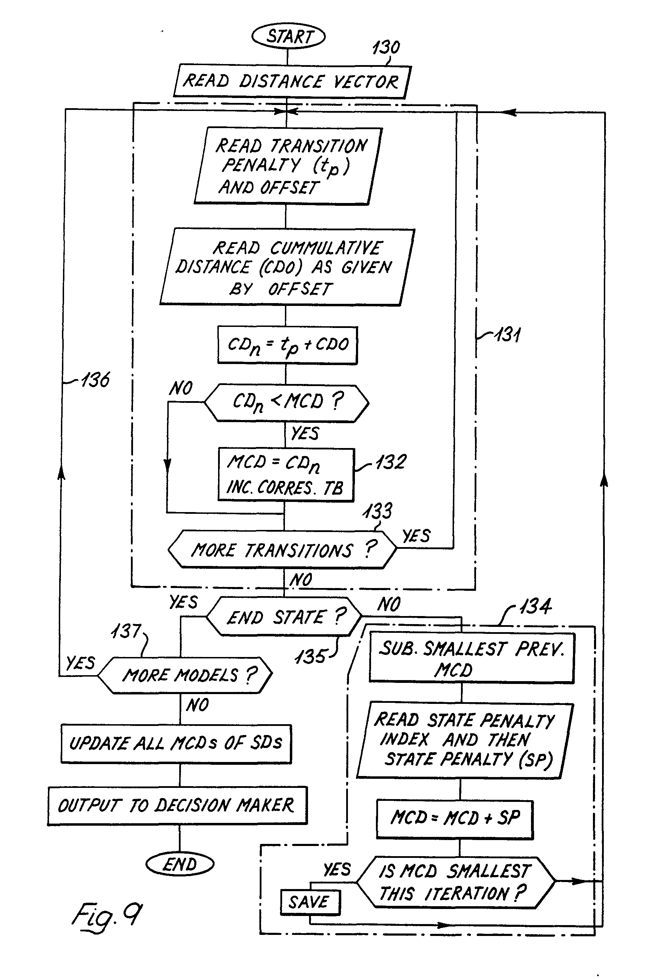

The operation of the flow chart of Figure 9 which shows one iteration of the Viterbi engine will mainly be apparent from the chart. In an operation 130 the distance vector is read into the RAM at a location which represents the current column of Table 1. A loop 131 is then entered in which the cumulative distance $CD_n$ for one transition of the last normal state of the first model is calculated. If the value of $CD_n$ is less than a reset value of the minimum cumulative distance for that state or a previously calculated value (MCD), as appropriate, then MCD is set to $CD_n$ in an operation 132. At the same time the corresponding traceback pointer TB for the cumulative distance of the originating state of that transition is incremented by one. A test 133 determines whether there are further transitions to the current state and if not then a loop 134 is followed in which scaling by subtracting the smallest minimum distance from the previous iteration is carried out, the state penalty at that state is added, and the smallest MCD is retained. At the end of the loop 134 MCD and TB for that state are retained and the loop 131 is repeated for the next state. In carrying out this repeat MCD is reset for the new state and the values of $CD_n$, $t_p$, CDO and TB relate to the new state. If the new state is an end state as determined by a test 135 then loops 131 and 134 are repeated as indicated by a jump 136 but again variables are reset as required to represent the new models and new states. When all the models have been processed as indicated by a test 137 the start dummy states of all models are updated and the various values of MCD and TB relating to all the states of all the models are ready for output to the processor 63 to allow decisions on words to be indicated as recognised. The next interation can now take place starting with the operation 130.

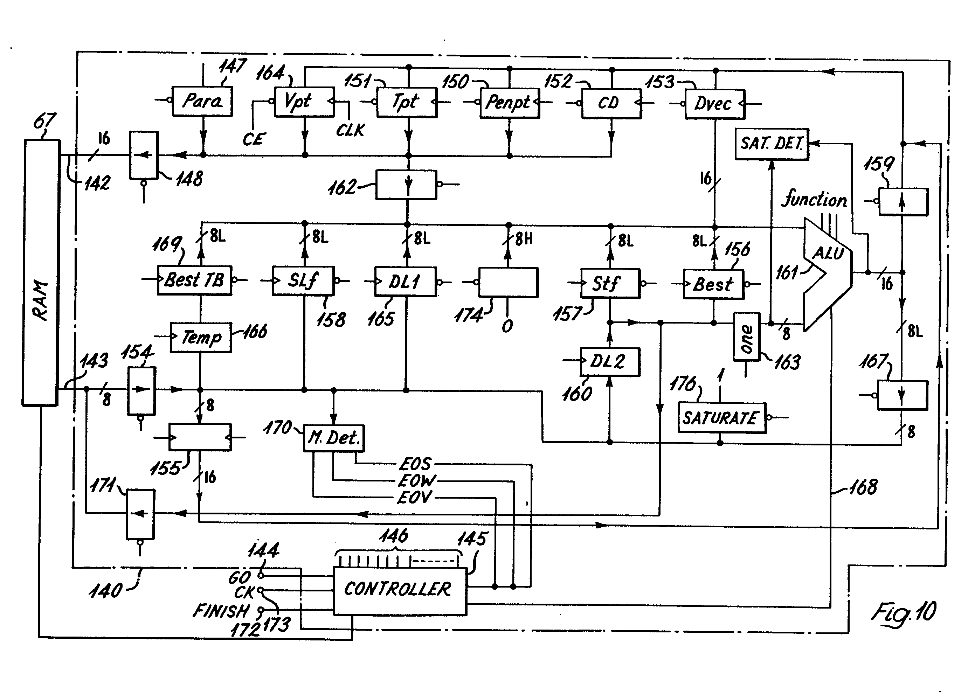

A circuit 140 which may be used for the Viterbi engine and thus the logic circuit 66 is shown in Figure 10, and may, for example, be constructed from discrete integrated circuits or a customised gate array. The Viterbi engine is coupled to the RAM 67 by means of a 16-bit address bus 142 and 8-bit data bus 143. The RAM 67 includes the areas 115 to 120 of Figure 8 and similar areas.

When an iteration of the Viterbi engine is to take place a "GO" signal is applied to a terminal 144 connected to a controller 145 which, in one example, comprises a sequencer and a memory (neither shown). In response to the "GO" signal the sequencer cycles through all its states and in so doing addresses the controller memory which outputs a sequence of patterns of binary bits on terminals 146. An enable terminal of every circuit of the Viterbi engine 140 (except the controller 145) is connected individually to a respective one of the terminals 145 so that as the patterns of bits appear different circuits or groups of circuits are enabled.

The first operation uses a parameter base address held permanently by a latch to address a parameter array in the RAM 67. A buffer 148 is enabled by the controller 145 and the RAM is addressed by way of the bus 142. The parameter array holds the addresses of the four pointers 123 (penalty pointer — Penpt), 124 (skeleton pointer — Tpt), 125 (cumulative distance pointer — CDpt) and an index pointer (Dvec) for reading Table 1. These pointers are read into latches 150, 151, 152 and 153, respectively, each in two serial 8-bit bytes by way of a buffer 154 and a latch 155, the controller 146 again applying the required control signals (from now on in this description the function of the controller will be taken to be understood except where special functions are required). The quantity by which cumulative distances should be reduced is also initialised by reading a further element of the parameter array and entering the result into a latch 158. To complete initialisation two latches 156 and 157 representing tbe smallest value of a previous cumulative distance plus a transition penalty and the smallest cumulative distance for the current iteration, respectively, are set to maximum.

The skeleton pointer 124 in the latch 151 is now used to read the first offset from the RAM 67 which is loaded into a latch 160 by way of the buffer 154. Then the pointer 124 is incremented by application to one input of an arithmetic logic unit (ALU) 161 through a buffer 162 at the same time as a buffer 163 is used to force a "one" on to another input of the ALU. A buffer 159 loads the incremented pointer 124 back to the latch 151.

The cumulative distance pointer 125 is passed from the latch 152 to the ALU where it is added to the required offset now held in the latch 160 and the result is passed to a latch 164 holding a temporary pointer (Vpt). Vpt is used to read the cumulative distance of the state originating the first transition (for example A to C in Figure 1) held in the RAM 67, since the offset is the incremental address of this distance in the area 120 from the pointer 125. The distance read is loaded into a latch 165 and Vpt is incremented by one using the buffer 162, the latch 163, the ALU and the buffer 159. Thus Vpt now points at the traceback pointer corresponding to the cumulative distance held by the latch 165 and this pointer is read into a latch 166. Now the penalty pointer 123 is used to read the appropriate transition penalty from the RAM 67 into the latch 160, and the ALU sums the contents of the latches 160 and 165, that is the cumulative distance and the transition penalty and the result is loaded into the latch 160 by way of a buffer 167. The latch 156 normally holds the smallest value cumulative distance found so far for a state but for the first transition it is, as already mentioned, already set to maximum. Thus normally the ALU compares the contents of the latches 156 and 160 and if the contents of the latch 160 is less than the smallest value found so far a flag is set on a control line 168 which causes the controller to read from the latch 160 into the latch 156, and to read the traceback pointer from the latch 166 into a latch 169. Thus the best cumulative distance plus transition penalty found so far and corresponding traceback pointer have been found.

The skeleton pointer is now used to initiate the investigation of another transition to the first state and the cumulative distance plus transition penalty found is checked to determine whether its sum is smaller than the value held in the latch 156. If so it is stored together with the corresponding traceback pointer in the latches 156 and 169. This process continues until the skeleton pointer 124 reaches the first marker which is of a type known as an end of state (EOS) marker. When such a marker appears at the output of the buffer 154 it is detected by a detector 170 and the controller 145 is signalled to continue in the way now described.

The ALU subtracts smallest cumulative distance found in the last iteration, held, as mentioned above, in the latch 158 from the contents of the latch 156 and writes the result into the latch 165. The address indicated by the penalty pointer 123 that is the index for Table 1 is used to write the index into the latch 160 and the ALU adds these contents to the contents of the latch 153 which as a result of the initialisation mentioned above now holds the base address of that area of the RAM 67 which contains the elements of the distance vector (that is the current column of Table 2). The result is written to the latch 164 and becomes the pointer Vpt which is used to read the appropriate element of the distance vector into the latch 160. The ALU adds the contents of the latches 160 and 165 (holding the scaled smallest cumulative distance) to give the updated cumulative distance which is entered into the location indicated by the pointer 125 held in the latch 152. The traceback pointer in the latch 169 is now incremented by one in the ALU and the result entered into the latch 160. The contents of the latch 152 are also incremented by one in the ALU and the address so formed is used to enter the traceback pointer in the latch 160 into the RAM 67 by way of a buffer 171. In order to be ready to process the next state the contents of the latch are again incremented by one.

The operations for one state have now been concluded and the skeleton pointer is again used to read the RAM and the other normal states are processed in a similar way. Eventually the detector 170 finds the marker between the last normal state and the end dummy, this marker being of a type known as end of word (EOW), and when the next state (the end state) is processed the following operations are omitted: the operation employing the index and the operation of incrementing the traceback pointer. Also since the end dummy processing is in the opposite direction through the model (see Figure 4) in those operations requiring an offset between the pointer 125 and the cumulative distances to be read, the offsets are subtracted instead of incremented.

When the next marker after an EOW marker is encountered by the skeleton pointer 124 initialisation of the latches 151, and 156 takes place, and then the next word model is processed. An invalid transition penalty is held in the location above the area 116 of the RAM 67 and when the controller attempts to continue processing after the last word in the vocabulary has been processed, the first transition penalty read out is found by the detector 170 to be the invalid penalty and an end of vocabulary (EOV) control signal reaches the controller signalling the end of an iteration. The controller then writes out the smallest cumulative distance found in this iteration for use in the next iteration and applies a "FINISH" signal to a terminal 172. The decision logic, usually in the form of a microprocessor, connected thereto then carries out an iteration using the cumulative distances and traceback pointers which have been transferred to the RAM 67. No further operations take place in the Viterbi engine until the decision logic or an associated microprocessor applies a further "GO" signal to the terminal 144.

As seen in Figure 10 the upper input of the ALU 161 is 16-bit while the lower input is 8-bit. Since the outputs of the latches 156 to 158, 165 and 169 are 8-bit, a latch 174 is provided which forces eight zero bits at the high significance side of the upper input of the ALU when these latches pass inputs to the ALU.

A detector 175 is connected at the output of the ALU to detect saturation and to control a buffer 176 so that whenever saturation occurs the output of the buffer 176 is enabled instead of the output of the buffer 167. The buffer 176 contains the maximum possible number while the buffer 167 may contain an overflow. The detector 175 also has an input from the buffer 163 and if this input indicates that the ALU is performing an operation on the maximum value then saturation is also deemed to have been detected and the output of the buffer 176 (that is the maximum value) is used as the result of the operation.

For synchronisation of the various circuits operated by the controller 145 a conventional clock pulse system is operated, with an external clock pulse applied to a terminal 173. The arrows to the right of each latch indicate a clock terminal while the circles to the left indicate an enable terminal.

The apparatus described above relates to the recognition of isolated words but it can be extended to recognise continuous speech formed from a limited trained vocabulary by tracking the various word model states which are traversed using, for example, the traceback pointer (see the above mentioned references by P.F. Brown *et al*, and by Ney).

It will be clear that the invention can be put into practice in many other ways than those specifically described above. For example other hardware for finding minimum cumulative distances may be specially designed, the distance vector can be derived from a linear prediction function and the Viterbi process can be replaced by a forward backward algorithm.

Probability functions may be derived in other ways than specifically described but the number of such functions must be smaller, preferably considerably, than the total number of states in all the finite state machines.

## Claims

1. Apparatus for recognising words in a predetermined vocabulary comprising means for successively sampling sounds and obtaining respective sets of signals representative of attributes of the sounds, means storing data representing a number of finite state machines one for, and forming an individual model of, each word in the predetermined vocabulary, the data specifying the states which form the finite state machines and assigning a probability function to each state with each probability function specifying the probabilities that the signals representative of the attributes of the sounds would assume any observed values if the models produced real sounds and any model was in a state to which that probability function is assigned, means for determining from the sets of signals and the probability functions, the probabilities that any given set of signals would be generated if the models produced real sounds and any model was in any given state, means for determining from the probabilities calculated and the properties of the finite state machines the maximum likelihoods that sequences of sound samples represent the predetermined words, and means for providing an output, based on the maximum likelihoods detected, indicating one of the predetermined words as being most likely to have been spoken, characterised in that the means for storing data stores data in which at least one probability function is assigned to more than one said state.

2. Apparatus according to Claim 1 characterised in that the means storing data stores, for each probability function, a template vector having elements relating to the intensities and/or variances of sounds in respective frequency ranges.

3. Apparatus according to Claim 1 or 2 characterised in that the means for determining probabilities comprises means for calculating a distance vector from the probability functions and each set of signals as they occur, each element of the distance vector has a corresponding probability function and is representative of the reciprocal of the probability of observing the current signal set if any finite state machine produced real sounds and occupied a state to which the corresponding probability function had been assigned, and a special purpose logic circuit means constructed to determine the minimum cumulative distances of each state of each finite state machine using the current distance vector.

4. A method of recognising words in a predetermined vocabulary comprising the steps of successively sampling sounds and obtaining respective sets of signals representative of attributes of the sounds, storing data representing a number of finite state machines one for, and forming an individual model of, each word in the predetermined vocabulary, the data specifying the states which form the finite state machines and assigning a probability function to each state with each probability function specifying the probabilities that the signals representative of the attributes of the sounds would assume any observed values if the models produced real sounds and any model was in a state to which that probability function is assigned, determining from the sets of signals and the probability functions, the probabilities that any given set of signals would be generated if the models produced real sounds and any model was in any given state, determining from the probabilities calculated and the properties of the finite state machines the maximum likelihoods that sequences of sound samples represent the predetermined words, and providing an output, based on the maximum likelihoods detected, indicating one of the predetermined words as being most likely to have been spoken, characterised in that in the data stored at least one probability function is assigned to more than one state.

5. Apparatus according to any of Claims 1 to 3 characterised in that each finite state machine comprises a plurality of the said states linked by transitions, each state and each transition having a corresponding state and transition penalty, respectively, held as part of the data representing the finite state machines, each transition penalty being a characteristic of the finite state machine of which it is a part and each state penalty depending on the probability function assigned to the corresponding state and on current ones of the said sets of signals.

6. Apparatus according to Claim 5 insofar as dependent on Claim 3 characterised by means for storing the minimum cumulative distance for each state of each machine, and wherein the logic circuit means is constructed to determine for each transition of a current state a value dependent on the minimum cumulative distance of the originating state of that transition and the transition penalty, to determine the minimum said value and to determine the minimum cumulative distance for the current state from the minimum said value and the state penalty for the current state.

7. A method of forming finite state machines to represent words in a predetermined vocabulary comprising sampling sounds making up each word in the vocabulary to obtain sets of signals representative of the words, forming an individual finite state machine for each word comprising states based on the sets of signals obtained for that word, and forming probability functions, characterised by assigning one probability function to each state, with at least one probability function assigned to more than one state, each probability function relating the sets of signals to the probability of observing the sounds when any of the finite state machines containing a state to which that probability function is assigned correctly models an utterance by being in that state.

8. A method according to Claim 7 characterised in that forming an individual finite state machine for each word and forming probability functions includes deriving data defining the said states for each word from the sets of signals, deriving one probability function for each state from the sets of signals, calculating the probability of transition from each state to every allowed subsequent state, in each finite state machine, entering data identifying each word as it is spoken, and storing data defining the states which form each machine and identifying the word which is represented by that machine, characterised by merging some of the probability functions to provide a plurality of the said functions less than a predetermined number, merging being carried out according to the degree of similarity of the probability functions and to the predetermined number.

9. A method according to Claim 8 characterised in that deriving the data defining the states and deriving one probability function for each state includes merging some sets of signals for each word according to criteria which relate to suitability for merging to provide data defining the states for that word.

10. A method according to Claim 9 characterised in that the criteria for merging sets of signals for each word include predetermined maximum and minimum numbers of states for each word.

11. A method according to Claim 9 or 10 characterised in that successive sets of signals are merged and the suitability of two successive sets for merging is assessed by calculating the logarithm of the ratio of the likelihood that each set of signals for potential merging arose from distinct sets.

12. A method according to any of Claims 8 to 11 characterised in that the suitability of two probability functions for merging is assessed by calculating the logarithm of the ratio of the likelihood that each probability function for potential merging arose from the same probability function to the likelihood that each probability function arose from distinct probability functions.

13. Apparatus characterised in that it is arranged to carry out the method of any of Claims 7 to 12.

**Patentansprüche**

1. Einrichtung zum Erkennen von Wörtern in einem vorbestimmten Vokabular, mit einer Einrichtung zum sukzessiven Probenehmen von Lauten und Erhalten jeweiliger Sätze von Merkmale der Laute darstellenden Signalen, einer Einrichtung, die Daten speichert, welche eine Anzahl endlicher Automaten darstellen, wobei für jedes Wort in dem vorbestimmten Vokabular einer vorgesehen ist und ein individuelles Modell dieses Wortes bildet, wobei die Daten die Zustände, welche die endlichen Automaten bilden, spezifizieren und jedem Zustand eine Wahrscheinlichkeitsfunktion zuordnen, wobei jede Wahrscheinlichkeitsfunktion die Wahrscheinlichkeiten, daß die Merkmale der Laute darstellenden Signale alle Werte annehmen würden, wenn die Modelle reale Laute erzeugten und jedes beliebige Modell in einem Zustand war, dem diese Wahrscheinlichkeitsfunktion zugeordnet ist, spezifiziert, einer Einrichtung zum Bestimmen der Wahrscheinlichkeiten, daß jeder beliebige Satz Signale erzeugt würde, wenn die Modelle reale Laute erzeugten und jedes beliebige Modell in einem gegebenen Zustand war, aus den Sätzen von Signalen und den Wahrscheinlichkeitsfunktionen, einer Einrichtung zum Bestimmen der maximalen Wahrscheinlichkeiten, daß Folgen von Lautproben die vorbestimmten Wörter darstellen, aus den berechneten Wahrscheinlichkeiten und den Eigenschaften der endlichen Automaten, und einer Einrichtung zum Erzeugen eines auf den detektierten maximalen Wahrscheinlichkeiten basierenden Ausgangssignals, welches eines der vorbestimmten Wörter als das am wahrscheinlichsten gesprochene anzeigt, dadurch gekennzeichnet, daß die Einrichtung zum Speichern von Daten Daten speichert, in denen wenigstens eine Wahrscheinlichkeitsfunktion mehr als einem Zustand zugeordnet ist.

2. Einrichtung nach Anspruch 1, dadurch gekennzeichnet, daß die Einrichtung zum Speichern von Daten für jede Wahrscheinlichkeitsfunktion einen Schablonenvektor mit Elementen speichert, die sich auf die Intensitäten und/oder Veränderlichkeiten von Lauten in jeweiligen Frequenzbereichen beziehen.

3. Vorrichtung nach Anspruch 1 oder 2, dadurch gekennzeichnet, daß die Einrichtung zum Bestimmen der Wahrscheinlichkeiten eine Einrichtung zum Berechnen eines Abstandsvektors aus den Wahrscheinlichkeitsfunktionen und jedem Satz von Signalen bei deren Vorkommen aufweist, wobei jedes Element des Abstandsvektors eine korrespondierende Wahrscheinlichkeitsfunktion aufweist und den Kehrwert der Wahrscheinlichkeit für die Beobachtung des laufenden Signalsatzes darstellt, wenn jeder beliebige endliche Automat reale Laute erzeugte und einen Zustand einnähme, dem die korrespondierende Wahrscheinlichkeitsfunktion zugeordnet worden ist, und eine Spezialzwecklogikschaltkreiseinrichtung aufweist, die so konstruiert ist, daß sie die minimalen kumulativen Abstände jedes Zustandes jedes endlichen Automaten unter Verwendung des laufenden Abstandsvektors bestimmt.

4. Verfahren zum Erkennen von Wörtern in einem vorbestimmten Vokabular, mit den Schritten eines sukzessiven Probenehmens von Lauten und Erhaltens jeweiliger Sätze von Merkmale der Laute darstellenden Signalen, eines Speicherns von Daten, die eine Anzahl von endlichen Automaten darstellen, wobei für jedes Wort in dem vorbestimmten Vokabular einer vorgesehen ist und ein individuelles Modell dieses Wortes bildet, wobei die Daten die Zustände, welche die endlichen Automaten bilden, spezifizieren und jedem Zustand eine Wahrscheinlichkeitsfunktion zuordnen, wobei jede Wahrscheinlichkeitsfunktion die Wahrscheinlichkeiten, daß die Merkmale der Laute darstellenden Signale alle beobachteten Werte annehmen würden, wenn die Modelle reale Laute produzierten und jedes beliebige Modell in einem Zustand war, dem diese Wahrscheinlichkeitsfunktion zugeordnet ist, spezifiziert, eines Bestimmens der Wahrscheinlichkeiten, daß jeder beliebige gegebene Satz Signale erzeugen würde, wenn die Modelle reale Laute produzierten und jedes beliebige Modell in jedem beliebigen gegebenen Zustand war, aus den Sätzen von Signalen und den Wahrscheinlichkeitsfunktionen, eines Bestimmens der maximalen Wahrscheinlichkeiten, daß Folgen von Lautproben die vorbestimmten Wörter darstellen, aus den berechneten Wahrscheinlichkeiten und den Eigenschaften der endlichen Automaten, und eines Erzeugens eines auf den detektierten maximalen Wahrscheinlichkeiten basierenden Ausgangssignals, das eines der vorbestimmten Wörter als das am wahrscheinlichsten gesprochene anzeigt, dadurch gekennzeichnet, daß in den gespeicherten Daten wenigstens eine Wahrscheinlichkeitsfunktion mehr als einem Zustand zugeordnet ist.

5. Einrichtung nach einem der Ansprüche 1 bis 3, dadurch gekennzeichnet, daß jeder endliche Automat eine Anzahl von mit Übergängen verbundenen Zuständen aufweist, wobei jeder Zustand und jeder Übergang ein korrespondierendes Zustands- bzw. Übergangspenalty aufweist, die als Teil der die endlichen Automaten darstellenden Daten gehalten sind, wobei jedes Übergangspenalty eine Charakteristik des endlichen Automaten ist, von dem es ein Teil ist, und wobei jedes Zustandspenalty von der dem korrespondierenden Zustand zugeordneten Wahrscheinlichkeitsfunktion und von laufenden Sätzen von Signalen abhängt.

6. Einrichtung nach Anspruch 3 und 5, gekennzeichnet durch eine Einrichtung zum Speichern des minimalen kumulativen Abstandes für jeden Zustand jedes Automaten, wobei die Logikschaltkreiseinrichtung so konstruiert ist, daß sie für jeden Übergang eines laufenden Zustandes einen von dem minimalen kumulativen Abstand des hervorrufenden Zustandes dieses Überganges und dem Übergangspenalty abhängenden Wert bestimmt, um das Minimum des Wertes zu bestimmen und um den minimalen kumulativen Abstand für den laufenden Zustand aus dem Minimum des Wertes und dem Zustandspenalty für den laufendenZustand zu bestimmen.

7. Verfahren zur Bildung eines endlichen Automaten zur Darstellung von Wörtern in einem vorbestimmten Vokabular mit einem Probenehmen von jedes Wort in dem Vokabular bildenden Lauten zum Erhalten von Sätzen von die Wörter darstellenden Signalen, einer Bildung eines individuellen endlichen Automaten für jedes Wort, der auf den Sätzen der für dieses Wort erhaltenen Signale basierende Zustände aufweist, und einer Bildung von Wahrscheinlichkeitsfunktionen, gekennzeichnet durch Zuordnung einer Wahrscheinlichkeitsfunktion zu jedem Zustand, wobei wenigstens eine Wahrscheinlichkeitsfunktion mehr als einem Zustand zugeordnet wird, wobei jede Wahrscheinlichkeitsfunktion die Sätze von Signalen mit der Wahrscheinlichkeit für die Beobachtung der Laute in Verbindung bringt, wenn jeder beliebige der einen Zustand, dem diese Wahrscheinlichkeitsfunktion zugeordnet ist, enthaltenden endlichen Automaten, in dem er in diesem Zustand ist, eine Aussprache korrekt bildet.

8. Verfahren nach Anspruch 7, dadurch gekennzeichnet, daß die Bildung eines individuellen Automaten für jedes Wort und die Bildung von Wahrscheinlichkeitsfunktionen ein Ableiten von die genannten Zustände für jedes Wort definierenden Daten aus den Sätzen von Signalen, ein Ableiten einer Wahrscheinlichkeitsfunktion für jeden Zustand aus den Sätzen von Signalen, ein Berechnen der Wahrscheinlichkeit für einen Übergang von jedem Zustand in jeden erlaubten nachfolgenden Zustand in jedem endlichen Automaten, ein Eingeben von Daten, die jedes Wort identifizieren, wenn es gesprochen wird, und ein Speichern von Daten, welche die Zustände definieren, die jeden Automaten bilden, und welche das Wort identifizieren, das durch diesen Automaten dargestellt wird, umfaßt, gekennzeichnet durch ein Verschmelzen einiger der Wahrscheinlichkeitsfunktionen zur Erzeugung einer Anzahl dieser Funktionen, die kleiner als eine vorbestimmte Zahl ist, wobei das Verschmelzen nach dem Grad der Ähnlichkeit der Wahrscheinlichkeitsfunktionen und der vorbestimmten Zahl ausgeführt wird.

9. Verfahren nach Anspruch 8, dadurch gekennzeichnet, daß die Ableitung der die Zustände definierenden Daten und die Ableitung einer Wahrscheinlichkeitsfunktion für jeden Zustand ein Verschmelzen einiger Sätze von Signalen für jedes Wort nach Kriterien, die sich auf eine Eignung zum Verschmelzen beziehen, um die Zustände für das Wort definierende Daten zu erzeugen, umfaßt.

10. Verfahren nach Anspruch 9, dadurch gekennzeichnet, daß die Kriterien zum Verschmelzen der Sätze von Signalen für jedes Wort vorbestimmte maximale und minimale Anzahlen von Zuständen für jedes Wort umfassen.

11. Verfahren nach Anspruch 9 oder 10, dadurch gekennzeichnet, daß sukzessive Sätze von Signalen verschmolzen werden und die Eignung zweier sukzessiver Sätze zum Verschmelzen durch Berechnung des Logarithmus des Verhältnisses zwischen der Wahrscheinlichkeit, daß jeder Satz Signale für eine mögliche Verschmelzung aus den verschmolzenen Sätzen hervorgeht, zu der Wahrscheinlichkeit, daß jeder Satz Signale aus verschiedenen Sätzen hervorgeht, abgeschätzt wird.

12. Verfahren nach einem der Ansprüche 8 bis 11, dadurch gekennzeichnet, daß die Eignung zweier Wahrscheinlichkeitsfunktionen für ein Verschmelzen durch Berechnen des Logarithmus des Verhältnisses zwischen der Wahrscheinlichkeit, daß jede Wahrscheinlichkeitsfunktion für eine mögliche Verschmelzung aus derselben Wahrscheinlichkeitsfunktion hervorging, zu der Wahrscheinlichkeit, daß jede Wahrscheinlichkeitsfunktion von verschiedenen Wahrscheinlichkeitsfunktionen hervorging, abgeschätzt wird.

13. Einrichtung, dadurch gekennzeichnet, daß sie so ausgebildet und angeordnet ist, daß sie das Verfahren eines der Ansprüche 7 bis 12 ausführt.

**Revendications**

1. Appareil pour la reconnaissance de mots dans un vocabulaire prédéterminé comportant des moyens pour échantillonner successivement des sons et obtenir des ensembles respectifs de signaux représentatifs d'attributs des sons, des moyens destinés à stocker des données représentant un nombre de machines à nombre fini d'état, une pour chaque mot formant un modèle individuel de chaque mot dans le vocabulaire prédéterminé, les données spécifiant les états qui constituent les machines à nombre fini d'état et assignant une fonction de probabilité à chaque état, avec chaque fonction de probabilité spécifiant les probabilités pour que les signaux représentatifs des attributs des sons prennent n'importe quelles valeurs observées si les modèles ont produit des sons réels et un modèle quelconque était dans un état pour lequel cette fonction de probabilité est assignée, des moyens pour déterminer, à partir des ensembles de signaux et des fonctions de probabilité, les probabilités pour qu'un ensemble quelconque de signaux donné soit généré si les modèles ont produit des sons réels et un modèle quelconque était dans un état quelconque donné, des moyens pour déterminer, à partir des probabilités calculées et des propriétés des machines à nombre fini d'état, les vraisemblances maximum pour que des séquences d'échantillons de son représentent les mots prédéterminés, et des moyens pour délivrer une sortie, basée sur les vraisemblances maximum détectées, représentant un des mots prédéterminés comme étant le plus vraisemblablement celui qui a été prononcé, caractérisé en ce que les moyens destinés à stocker des donnes stockent des donnes dans lesquelles au moins une fonction de probabilité est assignée à plus d'un des dits états.

2. Appareil selon la revendication 1, caractérisé en ce que les moyens destinés à stocker des données stockent, pour chaque fonction de probabilité, un vecteur modèle ayant des éléments se rapportant aux intensités et/ou variances de sons dans des plages de fréquence respectives.

3. Appareil selon la revendication 1 ou 2, caractérisé en ce que les moyens pour déterminer des probabilités comportent des moyens pour calculer un vecteur de distance à partir des fonctions de probabilité et de chaque ensemble de signaux lorsqu'ils apparaissent, chaque élément du vecteur de distance possède une fonction de probabilité correspondante et est représentatif de l'inverse de la probabilité d'observer l-ensemble de signaux courant si une machine à nombre fini d'état quelconque a produit des sons réels et occupé un état pour lequel la fonction de probabilité correspondante a été assignée, et un circuit logique à usage spécial construit pour déterminer les distances cumulatives minimum de chaque état de chaque machine à nombre fini d'état utilisant le vecteur de distance courant.

4. Procédé de reconnaissance de mots dans un vocabulaire prédéterminé comportant les étapes d'échantillonnage successif des sons et d'obtention des ensembles respectifs de signaux représentatifs d'attributs des sons, de stockage des données représentant un nombre de machines à nombre fini d'état, une pour chaque mot formant un modèle individuel de chaque mot dans le vocabulaire prédéterminé, les données spécifiant les états qui constituent les machines à nombre fini d'état et assignant une fonction de probabilité à chaque état avec chaque fonction de probabilité spécifiant les probabilités pour que les signaux représentatifs des attributs des sons prennent n'importe quelles valeurs observées si les modèles ont produit des sons réels et un modèle quelconque était dans un état pour lequel cette fonction de probabilité est assigné, de détermination, à partir des ensembles de signaux et des fonctions de probabilité, des probabilités pour qu'un ensemble quelconque de signaux donné soit généré si les modèles ont produit des sons réels et un modèle quelconque était dans un état quelconque donné, de détermination, à partir des probabilités calculées et des propriétés des machines à nombre fini d'état, des vraisemblances maximum pour que des séquences d'échantillons de son représentent les mots

16

# EP 0 215 573 B1

prédéterminés, et de délivrance d'une sortie, basée sur les vraisemblances maximum détectées, représentant un des mots prédéterminés comme étant le plus vraisemblablement celui qui a été prononcé, caractérisé en ce que, dans les données stockées, au moins une fonction de probabilité est assignée à plus d'un des dits états.

5. Appareil selon l'une quelconque des revendications 1 à 3, caractérisé en ce que chaque machine à nombre fini d'état comporte plusieurs des dits états liés par des transitions, chaque état et chaque transition ayant respectivement une pénalité d'état et de transition correspondante considérée comme une partie des données représentant les machines à nombre fini d'état, chaque pénalité de transition étant une caractéristique de la machine à nombre fini d'état dont elle fait partie et chaque pénalité d'état dépendant de la fonction de probabilité assignée à l'état correspondant et dépendant des ensembles courants des dits ensembles de signaux.

6. Appareil selon la revendication 5 lorsqu'elle est rattachée à la revendication 3, caractérisé par des moyens destinés à stocker la distance cumulative minimum pour chaque état de chaque machine à nombre fini d'état, et dans lequel le circuit logique est construit de façon à déterminer pour chaque transition d'un état courant une valeur dépendant de la distance cumulative minimum de l'état d'origine de cette transition et de la pénalité de transition, de façon à déterminer la dite valeur minimum et de façon à déterminer la distance cumulative minimum pour l'état courant à partir de ladite valeur minimum et de la pénalité d'état pour l'état courant.

7. Procédé de formation de machines à nombre fini d'état pour représenter des mots dans un vocabulaire prédéterminé comportant l'échantillonnage de sons constituant chaque mot dans le vocabulaire afin d'obtenir des ensembles de signaux représentatifs des mots, la formation d'une machine à nombre fini d'état individuelle pour chaque mot comportant des états basés sur les ensembles de signaux obtenus pour ces mots, et la formation de fonctions de probabilité, caractérisé par l'assignation d'une fonction de probabilité à chaque état, avec au moins une fonction de probabilité assignée à plus d'un état, chaque fonction de probabilité rapportant les ensembles de signaux à la probabilité d'observer les sons lorsqu'une machine à nombre fini d'état quelconque contenant un état pour lequel cette fonction de probabilité est assignée modélise correctement une prononciation en étant dans cet état.

8. Procédé selon la revendication 7, caractérisé en ce que la formation d'une machine à nombre fini d'état individuelle pour chaque mot et la formation de fonctions de probabilité comporte la dérivation de données définissant les dits états pour chaque mot à partir des ensembles de signaux, la dérivation d'une fonction de probabilité pour chaque état à partir des ensembles de signaux, le calcul de la probabilité de transition de chaque état à tout état consécutif autorisé, dans chaque machine à nombre fini d'état, d'entrée de données identifiant chaque mot lorsqu'il est prononcé, et de stockage de données définissant les états qui forment chaque machine à nombre fini d'état et identifiant le mot qui est représenté par cette machine à nombre fini d'état, caractérisé par la fusion de certaines des fonctions de probabilité pour fournir plusieurs des dites fonctions en nombre inférieure à un nombre prédéterminé, la fusion étant réalisé d'après le degré de similarité des fonctions de probabilités et d'après le nombre prédéterminé.

9. Procédé selon la revendication 8, caractérisé en ce que la dérivation des données définissant les états et la dérivation d'une fonction de probabilité pour chaque état comporte la fusion de certains ensembles de signaux pour chaque mot d'après des critères qui se rapportent à l'aptitude à la fusion afin de procurer des données définissant les états pour ce mot.

10. Procédé selon la revendication 9, caractérisé en ce que les critères pour fusionner des ensembles de signaux pour chaque mot comportent des nombres maximum et minimum d'états pour chaque mot.

11. Procédé selon la revendication 9 ou 10, caractérisé en ce que des ensembles successifs de signaux sont fusionnés et l'aptitude pour deux ensembles successifs à être fusionnés est déterminée en calculant le logarithme du rapport de la vraisemblance pour que chaque ensemble de signaux destiné à une fusion potentielle se soit présenté dans les ensembles fusionnés sur la vraisemblance pour que chaque ensemble de signaux se soit présenté dans des ensembles distincts.

12. Procédé selon l'une quelconque des revendications 8 à 11, caractérisé en ce que l'aptitude à être fusionnées de deux fonctions de probabilité est déterminée en calculant le logarithme du rapport de la vraisemblance pour que chaque fonction de probabilité destinée à une fusion potentielle se soit présentée dans la même fonction de probabilité sur la vraisemblance pour que chaque fonction de probabilité se soit présentée dans des fonctions de probabilité distinctes.

13. Appareil caractérisé en ce qu'il est prévu pour mettre en oeuvre le procédé selon l'une quelconque des revendications 7 à 12.

Fig.1a

START

ENTER
WORD EXAMPLE — 10

FORM FEATURE
VECTORS — 11

DYNAMIC TIME
WARPING — 12

FORM COMPOSITE
TEMPLATES
$\bar{x}_i$ , $\sigma_i^2$, N — 13

FURTHER
WORD EXAMPLES
? — 14
Y

CALC $\lambda$ FOR ALL SUCCESSIVE
TEMPLATE VECTORS n and n-1 — 15

CALC $\lambda'$ FOR
n=2 to n=n$_m$ — 15'

No. OF STATES
$\leqslant$ MAX ? — 16
N

$\lambda'_{max} <$ THRSH
? — 17
Y

No. OF STATES
$\leqslant$ MIN. ? — 19
Y    N

INSERT SEGMENTATION
MARKER — 18

Fig.1b

*Fig. 2*

Fig. 3

Fig. 4

Fig. 7

Table 1

| INDEX | ITERATION | | | | | |
|---|---|---|---|---|---|---|
| | 0 | 1 | 2 | —·—·—·— | i | —·—·······— |
| $I_1$ | | | | | | |
| $I_2$ | | | | | | |
| $I_i$ | | | | | | |

Fig.5

Table 2

| ITERATION | STATE | | | | | |
|---|---|---|---|---|---|---|
| | A | | B | | C | |
| | MCD | TB | MCD | TB | MCD | TB |
| 0 | MAX | MAX | MAX | MAX | MAX | MAX |
| 1 | $CD_{A1}$ | $TB_{A1}$ | $CD_{B1}$ | $TB_{B1}$ | $CD_{C1}$ | $TB_{C1}$ |
| 2 | $CD_{A2}$ | $TB_{A2}$ | $CD_{B2}$ | $TB_{B2}$ | $CD_{C2}$ | $TB_{C2}$ |
| | | | | | | |
| i | $CD_{Ai}$ | $TB_{Ai}$ | $CD_{Bi}$ | $TB_{Bi}$ | $CD_{Ci}$ | $TB_{Ci}$ |
| | | | | | | |

Fig.6

STATE ED

STATE A

STATE B

| INDEX |
| $t_{p3}$ |
| $t_{p2}$ |
| $t_{p1}$ |

STATE C

*123*

*116* *117* *118*

*115*

| MARKER |
| OFFSET 3 |
| OFFSET 2 |
| OFFSET 1 |

STATE C

*124*

*Fig. 8*

STATE SD

*120*

STATE ED

STATE A

STATE B

| TB |
| CD |

STATE C

*125*

*121*

*122*

START

130 READ DISTANCE VECTOR

READ TRANSITION PENALTY $(t_p)$ AND OFFSET

READ CUMMULATIVE DISTANCE (CDO) AS GIVEN BY OFFSET

$CD_n = t_p + CDO$

131

136

NO ← $CD_n < MCD$ ?

YES

$MCD = CD_n$ INC. CORRES. TB — 132

133

MORE TRANSITIONS ? — YES

NO

YES ← END STATE ? → NO — 134

137

YES ← MORE MODELS ?

135 — SUB. SMALLEST PREV. MCD

NO

UPDATE ALL MCDs OF SDs

READ STATE PENALTY INDEX AND THEN STATE PENALTY (SP)

OUTPUT TO DECISION MAKER

$MCD = MCD + SP$

END

YES ← IS MCD SMALLEST THIS ITERATION ?

SAVE

Fig. 9

Fig.10

EP 0 215 573 B1